# EUROPÄISCHE PATENTSCHRIFT

(11) **EP 1 347 918 B1**
(45) Veröffentlichungstag und Bekanntmachung des Hinweises auf die Patenterteilung: **09.11.2005**
(21) Anmeldenummer: 01902295.3
(22) Anmeldetag: 05.01.2001
(51) Int. Cl.: B65C 9/26, G11B 23/40

(54) **VORRICHTUNG ZUM AUFLEGEN EINER ETIKETTENSCHEIBE AUF EINE COMPACT DISC, SOWIE VERFAHREN ZUR HERSTELLUNG UND ZUR VERWENDUNG DER VORRICHTUNG**
DEVICE FOR PLACING A LABEL DISK ON A COMPACT DISK, AND METHOD FOR PRODUCING AND USING SAID DEVICE
DISPOSITIF POUR APPLIQUER UNE ETIQUETTE RONDE SUR UN DISQUE COMPACT ET PROCEDE DE PRODUCTION ET D'UTILISATION DE CE DISPOSITIF

(43) Veröffentlichungstag der Anmeldung: 01.10.2003
(73) Patentinhaber: Neato (UK) Limited, Ruislip, Middlesex H84 7AE (GB)
(72) Erfinder: PIRES, Selwyn, Neato (UK) Limited, Ruislip, Middlesex H84 7AE (GB); LEONARDI, Paulo, Fellows Leonardi Spa, I-60021 Camerano (IT)
(74) Vertreter: Altenburg, Udo
(86) Internationale Anmeldenummer: PCT/EP2001/000071
(87) Internationale Veröffentlichungsnummer: WO 2002/053463

(56) Entgegenhaltungen:
- WO-A-00/15503
- WO-A-98/26986
- WO-A-99/14129
- DE-A- 19 917 454
- DE-U- 29 817 456
- US-A- 5 951 819

## Beschreibung

Die Erfindung betrifft eine Vorrichtung und ein Verfahren zum Auflegen einer Etikettenscheibe (Labeln) auf eine Compact Disc gemäß dem Oberbegriff des Anspruchs 1 und ein Verfahren zur Herstellung der Vorrichtung, sowie ein Verfahren zur Verwendung der Vorrichtung.

Aus der Druckschrift DE 295 21 938 U1 ist eine Vorrichtung für das Plazieren von selbsthaftenden Labeln auf Compact Disc bekannt. Diese Vorrichtung besteht aus mehreren Einzelteilen, die koaxial ineinander steckbar sind und dabei in aufeinander zentrierter und ausgerichteter Weise eine Etikettenscheibe auf einer Compact Disc zentriert positionieren.

Diese Vorrichtung hat den Nachteil, dass unterschiedlich zu bearbeitende Einzelteile herzustellen sind, die passgenau ineinander geschachtelt werden müssen. Darüber hinaus hat die Vorrichtung den Nachteil, dass sie weder eine stabile Ruhestellung aufweist, noch eine stabile Etikettierstellung besitzt, sondern beide Stellungen von Hand durch den Benutzer einzuhalten sind, ohne dass entsprechende Anschläge oder andere Hilfsmittel dem Benutzer beim Ausrichten und Zusammenfahren der Etikettenscheibe mit der Compact Disc zur Verfügung stehen.

Es besteht die Notwendigkeit bei der zunehmenden Verbreitung von Compact Discs, die auch als Laser Discs bekannt sind und in Form von Musik- und Compact Disc-ROM-Produkten vertrieben werden, die Handhabung der Etikettiervorrichtungen zu vereinfachen und ein sicheres zentriertes Aufkleben von Etikettenscheiben auf Compact Discs zu gewährleisten, zumal in den letzten Jahren die Popularität von bespielbaren Compact Discs, beispielsweise von Sony, 3M und Kodak, angestiegen ist. Ferner werden diese Compact Discs zur Datenspeicherung und zur Speicherung von Programmen verwendet. Mit dieser Vielfalt von Anwendungen ist die Notwendigkeit gestiegen, Compact Discs zu kennzeichnen und zu etikettieren, sobald sie hergestellt sind. Etiketten auf Compact Discs sind erforderlich, da es kein visuelles Verfahren gibt, um die Inhalte der hergestellten Compact Discs, die mehr als 680 MB Daten enthalten können, zu ermitteln. Während Hersteller großer Mengen identischer Compact Discs mit vorgefertigten und aufgebrachten Rohdisketten oder direkt auf die Rückseite der Scheiben eigene Identifikationsinformationen aufmalen, aufdrucken oder in anderer Weise mit einer Schicht aus Tinte und Pigmenten aufbringen können, ist dieses Verfahren für Hersteller bespielbarer Compact Discs nicht ausführbar, da der Benutzer selbst bestimmt, was auf den Compact Discs gespeichert werden soll. Bei kleinen Auflagen und Auflagen, bei denen eine sofortige Verfügbarkeit der Compact Discs erforderlich wird, nehmen das Drucken oder Aufmalen von Etikettierungen zuviel Zeit in Anspruch und erfordern hohe Investitionskosten für die spezielle Ausrüstung.

Eine weitere Ausführungsform einer Etikettiervorrichtung ist aus der Druckschrift WO 98/26986 bekannt. Diese Vorrichtung besteht aus einem Basisteil, das von einem Außenring umgeben ist und das in seinem Zentrum einen feststehenden Zentrierstab aufweist, wobei der Durchmesser des Zentrierstabes der zentralen Öffnung einer Compact Disc entspricht. Auf dem Basisteil ist eine Scheibe mit sich radial nach innen erstreckenden Blattfedern befestigt. Die Blattfedern sind einseitig am Rand der Scheibe eingespannt und tragen auf ihrem freien Ende vertikal ausgerichtete Zentrierelemente zum Zentrieren einer Etikettenscheibe und zum Tragen einer auf den Zentrierstab aufsteckbaren Compact Disc. Dabei wird die Compact Disc durch die federnd gelagerten Zentrierelemente in einem Abstand von der Etikettenscheibe gehalten, und zum Etikettieren kann die Compact Disc auf die Etikettenscheibe gepresst werden. Dabei besteht die Gefahr, dass sich die Etikettenscheibe verschiebt, da die Zentrierelemente beim Absenken der Compact Disc zueinander verschoben werden und somit den Zentrierdurchmesser verringern.

Der Nachteil der Verringerung des Zentrierdurchmessers kann durch genau dimensionierte Nasen an den Spitzen der Zentrierelemente kompensiert werden, jedoch können diese Nasen nur wirksam werden, wenn die Compact Disc von dem Bediener vollständig planparallel zum Label aufgesetzt wird. Dieses hat jedoch einen erheblichen zusätzlichen Nachteil, denn bei der Handhabung dieser Etikettiervorrichtung kann nicht davon ausgegangen werden, dass der Benutzer eine planparallele Führung der freiliegenden Compact Disc zu der in einem Abstand angeordneten Etikettenscheibe durchführt. Schon bei einem leichten Verkanten der Compact Disc wird die Etikettenscheibe an einem Außenpunkt befestigt oder verklebt, der nicht dem Zentrum der Compact Disc entspricht, und es kommt zu einer Beschädigung des Innenrandes der Etikettenscheibe durch die an den Zentrierelementen angebrachten Nasen auf dem gegenüberliegenden Innenrand der durch Verkanten entstandenen Verklebung zwischen Compact Disc und Etikettenscheibe.

Werden die Zentriernasen weggelassen, um eine Beschädigung der Etikettenscheiben durch die Nasen beim Verkanten der Compact Disc zu vermeiden, so besteht die Gefahr, dass die Etikettenscheibe völlig dezentriert auf der Compact Disc verklebt wird, da sich beim Absenken der Compact Disc der Zentrierdurchmesser der Zentrierelemente verringert und somit die Position der Etikettenscheibe nicht gewährleistet ist. Mit dem Aufkleben einer dezentrierten Etikettenscheibe auf eine Compact Disc wird bei den hohen Drehgeschwindigkeiten der Compact Disc im Wiedergabegerät eine derartige Unwucht auftreten, die das Antriebsaggregat des Wiedergabegerätes belastet oder sogar beschädigen kann.

Eine Vorrichtung zum Auflegen einer Etikettenscheibe auf eine compact Disc gemäß dem Oberbegriff des Anspruchs 1 ist aus WO-00 15 503 A bekannt.

Aufgabe der Erfindung ist es, eine Vorrichtung zum Auflegen einer Etikettenscheibe mit einer zentralen Öffnung auf einer Compact Disc anzugeben, welche die Nachteile im Stand der Technik überwindet und eine verbesserte Führung der Etikettenscheiben in bezug auf die Compact Disc während der Vorbereitung und der Durchführung des Etikettiervorgangs gewährleistet. Ferner ist es Aufgabe der Erfindung, eine Etikettiervorrichtung anzugeben, die preiswert herstellbar ist und einen vereinfachten kostengünstigen Aufbau aufweist.

Gelöst wird diese Aufgabe mit dem Gegenstand der unabhängigen Ansprüche. Vorteilhafte Weiterbildungen der Erfindung ergeben sich aus den abhängigen Ansprüchen.

Vorzugsweise weist die Vorrichtung zum Auflegen einer Etikettenscheibe mit einer zentralen Öffnung auf eine Compact Disc mit kleinerer zentraler Öffnung folgende Komponenten auf:
1. ein Positionierteil, das mindestens ein Zentrierelement aufweist, dessen Außenabmessung der zentralen Öffnung der Etikettenscheibe angepasst ist und das in seinem Zentrum ein Zentrierteil - vorzugsweise einen Zentrierstab - aufweist, dessen Außendurchmesser der zentralen Öffnung der Compact Disc angepasst ist und der über das Zentrierelement hinausragt,
2. ein Basisteil mit einem Außenring, der eine scheibenförmige Oberseite trägt, auf welcher die Etikettenscheibe angeordnet werden kann, wobei die Oberseite eine Zentrumsöffnung aufweist, in der das Positionierteil senkrecht zur Oberseite bewegbar angeordnet ist und in einer Ruhestellung über die Oberseite hinausragt und in einer Etikettierstellung in die Zentrumsöffnung abgesenkt ist,
3. mindestens eine Federzunge, die in einer ersten angepassten Aussparung des Außenringes angeordnet ist, wobei die Zungenwurzel der Federzunge an einem Fußbereich des Außenringes befestigt ist und die Zungenspitze einen flexiblen Tragbalken trägt,
4. wobei der Tragbalken sich von der Zungenspitzen radial einwärts in einer zweiten angepassten Aussparung der scheibenförmigen Oberseite bis zu dem Positionierteil erstreckt.

Diese Vorrichtung hat den Vorteil, dass das Positionierteil, das auf seinen Zentrierelementen eine Compact Disc tragen kann, eine kompakte Einheit mit dem mindestens einen Zentrierelement und dem Zentrierstab bildet, so dass bei dem Übergang von der Ruhestellung des Positionierteils zur Etikettierstellung des Positionierteils sich weder die Etikettenscheibe, die auf der scheibenförmigen Oberseite des Außenringes aufliegt, noch die Compact Disc, die durch den sich mit dem Positionierteil bewegenden Zentrierstab und die Zentrierelemente in zentrierter Ausrichtung gegenüber der Etikettenscheibe gehalten wird, gegeneinander verschieben können, selbst wenn der Benutzer die Compact Disc beim Aufsetzen leicht verkanten sollte.

Durch den stabilen und starren Aufbau des Positionierteils und des damit fest verbundenen Zentrierelements sowie des damit verbundenen festgefügten Zentrierstabes ändern sich bei dem Übergang von der Ruhestellung zu der Etikettierstellung weder der Zentrierdurchmesser für die Etikettenscheibe noch der Zentrierdurchmesser für die Compact Disc. Ferner wird die Compact Disc in einer völlig stabilen Position gehalten, da keine Relativbewegung zwischen dem Zentrierstab und der zentralen Öffnung der Compact Disc beim Etikettiervorgang erforderlich wird, so dass die Gefahr des Verkantens der Compact Disc nicht gegeben ist.

In einer bevorzugten Ausführungsform der Erfindung ist der Querschnitt der Federzungen konkav gewölbt, und jede Federzunge weist einen Druckpunkt auf. Dieses wird in vorteilhafter Weise erreicht, wenn die Federzungen Teile des Außenringes sind und durch Schlitzen des Außenringes geformt werden. Damit entsteht ein konkaver Querschnitt der Federzungen, dessen Krümmung der Krümmung des Außenringes entspricht. Beim Absenken des Positionierteils von der Ruhestellung in die Etikettierstellung muss somit durch die Kraftübertragung der Tragbalken ein Druckpunkt überwunden werden, um den Formwiderstand des konkaven Querschnitts der Federzungen zu überwinden und in die Etikettierstellung zu fahren. Das hat gleichzeitig den Vorteil, dass eine erheblich verstärkte Rückstellkraft für das Zurückschnappen in die Ruhestellung durch die Federzungen bewirkt wird. Dieser Druckpunkt erleichtert zusätzlich die Handhabung der Vorrichtung, weil das Positionierteil beim Auflegen der Etikettenscheibe und beim Auflegen der Compact Disc eine äußerst stabile Position einnimmt, die erst bei Überwindung des Druckpunktes der konkav gewölbten Feder das Positionierteil freigibt, um den Etikettiervorgang durchzuführen.

In einer weiteren Ausführungsform der Erfindung ist das Positionierteil mit dem Zentrierelement und dem Zentrierstab eine einstückige Einheit, die formstabil und belastbar ist, ohne sich beim Übergang von der Ruhestellung zu der Etikettierstellung zu verformen.

In einer weiteren bevorzugten Ausführungsform der Erfindung sind das Zentrierelement und der Zentrierstab miteinander und gleichzeitig senkrecht zur scheibenförmigen Oberseite bewegbar. Eine derartige Funktion ist mit dem Gegenstand, der aus der WO 98/26986 bekannt ist, nicht durchführbar, da der Zentrierstab in der bekannten Ausführungsform unbeweglich auf dem Basisteil montiert ist und somit die Compact Disc mit Ihrer zentralen Öffnung an dem Zentrierstab mit der Gefahr des Verkantens entlang geführt werden muss, was durch die vorliegenden Erfindung verbessert ist, da bei der vorliegenden Erfindung während des Etikettiervorgangs keine relativ Bewegung zwischen Compact Disc Zentrierstab auftritt oder von dem Benutzer durchzuführen ist.

Eine weitere Ausführungsform der Erfindung sieht vor, dass das Zentrierelement, der Zentrierstab, die flexiblen Tragbalken, die Federzungen und der Außenring unlösbar miteinander verbunden sind. Dieses wird durch eine einstückige Formgebung der Vorrichtung erreicht. Es werden folglich im Gegensatz zum Stand der Technik nicht mehrere komplexe Teile zur Ausbildung der Vorrichtung zusammengefiigt oder zusammengepasst, sondern alle Funktionsteile der vorliegenden Erfindung bilden zusammen ein einstückiges Bauteil, das vorzugsweise als einstückiges Spritzgussteil ausgebildet ist.

Um ein einstückiges Spritzgussteil zu verwirklichen, das in einfachster Weise in einer zweiteiligen Spritzgussform herstellbar ist, können die Wandstärken leicht verjüngt ausgebildet sein, um ein Ablösen von der Spritzgussform zu gewährleisten. Diese verjüngten Wandstärken verbessern auch die Funktionsweise der Etikettiervorrichtung, weil der Zentrierstab nicht vollständig zylindrisch ausgebildet ist, sondern sich zu seiner Spitze hin verjüngt, was ein Aufbringen der Compact Disc erleichtert. Gleiches gilt für die Zentrierelemente, die durch ihre sich verjüngende Wandstärke das Ansetzen und Auflegen der Etikettenscheibe erleichtern. Die Verjüngung kann in vorteilhafter Weise mit einem Winkel zwischen 0,5 und 5 Grad ausgeführt sein.

In einer weiteren bevorzugten Ausführungsform der Erfindung weist das Positionierteil einen ringförmigen Sockel als Zentrierelement auf, aus dessen Oberfläche im Zentrum der Zentrierstab herausragt. Ein derartiges Positionierteil hat den Vorteil, dass der ringförmige Sockel, welcher der Zentrierung der Etikettenscheibe dient, äußerst formstabil ist und eine ebene Oberfläche ausbilden kann, auf der eine Compact Disc zentriert durch den im Zentrum herausragenden Zentrierstab aufgelegt werden kann. Der ringförmige Sockel sorgt dafür, dass beim Übergang von der Ruhestellung zu der Etikettierstellung der vertikale Druck auf das Positionierteil durch den Benutzer über die Tragbalken zu den im Außenring angeordneten Federzungen übertragen wird, ohne dass sich die Dimensionen des ringförmigen Sockels und des Zentrierstabs ändern, so dass bei dem Übergang von der Ruhestellung zur Zentrierstellung die Positionen von Etikettenscheibe zu Compact Disc relativ zueinander unverändert bleiben.

In einer weiteren Ausführungsform der Erfindung kann das Zentrierelement ein Ring sein, der eine Grundplatte aufweist, in deren Zentrum der Zentrierstab angeordnet ist. Ein derartiger Zentrierring mit Grundplatte hat den Vorteil, dass eine sichere Übersetzung der Druckkraft in eine Zugkraft über die Tragbalken zu den Zungenspitzen beim Übergang von der Ruhestellung zu der Etikettierstellung erreicht wird, ohne ein Verformen des Zentrierelementes zu bewirken.

In einer weiteren bevorzugten Ausführungsform der Erfindung ist vorgesehen, dass das Zentrierelement mindestens zwei Kreissegmente aufweist, die über die Oberseite des Außenringes hinausragen und über eine kreisförmige Grundplatte miteinander verbunden sind. Diese Konstruktion entspricht der Konstruktion eines ringförmigen Zentrierelementes, jedoch ist der Ring nicht vollständig ausgeführt, sondern es sind lediglich Kreisringsegmente vorgesehen, die auf einer kreisförmigen Grundplatte angeordnet sind, wobei die kreisförmige Grundplatte wiederum die Zugkräfte aufnimmt, die bei dem Übergang von der Ruhestellung zur Etikettierstellung auftreten.

In einer weiteren Ausführungsform der Erfindung ist es vorgesehen, die Tragbalken radial einwärts zum Positionierteil hin zu verjüngen. Damit wird die Flexibilität der Tragbalken in vorteilhafter Weise erhöht, so dass die Tragbalken nur einen geringen Widerstand beim Übergang aus der Ruhestellung in die Etikettierstellung bewirken und eine geringere Verformungskraft auf die Zentrierelemente ausüben.

Eine weitere Ausführungsform der Erfindung sieht vor, dass die Federzungen in dem Zungenwurzelbereich breiter sind als in dem Zungenspitzenbereich. Bei dieser Ausführungsform werden vorteilhafterweise die Zungenspitzen der Federzungen stärker beansprucht als der Zungenwurzelbereich, so dass der Fußbereich des Außenringes geringer belastet wird und somit die Gefahr von Rissbildungen im Fußbereich des Außenringes vermindert werden.

In einer weiteren Ausführungsform der Erfindung ist der Außenring in dem Fußbereich verstärkt. Dieses kann durch eine wulstförmige Verdickung erreicht werden. Eine derartige Verstärkung dient der Formstabilität des Außenringes und vermindert die Gefahr von Rissbildungen im Zungenwurzelbereich der Federzungen am Außenring. In einer weiteren bevorzugten Ausführungsform der Erfindung weist der Außenring im Fußbereich einen Außenflansch auf. Dieser Außenflansch kann dazu dienen, die Vorrichtung beispielsweise auf einem Montagetisch zu befestigen, um eine unveränderbare Arbeitsposition vorzusehen. Gleichzeitig verstärkt der Außenflansch den Fußbereich des Außenringes, so dass die Gefahr von Rissbildungen im Wurzelbereich der Federzungen verringert wird.

In einer weiteren bevorzugten Ausführungsform der Erfindung werden mindestens drei Federzungen mit drei flexiblen Tragbalken auf dem Umfang des Außenringes verteilt angeordnet. Drei und mehr Federzungen mit den zugehörigen flexiblen Tragbalken vergrößern die Richtungsstabilität des Positionierteils beim Übergang von der Ruhestellung in die Etikettierstellung. Gleichzeitig vermindern sie jedoch die Auflagefläche für die Etikettenscheibe auf der scheibenförmigen Oberseite des Außenringes.

Eine weitere Ausführungsform der Erfindung sieht vor, dass auf der scheibenförmigen Oberseite des Außenringes eine Ausgleichsscheibe angeordnet wird, die eine zentrale Öffnung aufweist, durch die das Positionierteil frei bewegbar ist und die Etikettenscheibe trägt. Diese Ausgleichsscheibe kann eine von der Vorrichtung abnehmbare Komponente sein, so dass sie jederzeit austauschbar ist, falls die scheibenförmige Oberfläche der Ausgleichsscheibe durch Klebstoffreste oder andere Gebrauchsspuren beschädigt ist. Diese Vorrichtung hat den Vorteil, dass die Arbeitsfläche auf der scheibenförmigen Oberseite des Außenringes durch die Ausgleichsscheibe jederzeit erneuerbar ist, ohne dass die gesamte Vorrichtung auszutauschen wäre.

Ein Verfahren zur Verwendung der Vorrichtung zum Etikettieren einer Compact Disc weist vorzugsweise folgende Verfahrensschritte auf:
1. Auflegen der Etikettenscheibe mit Etikett nach unten auf die horizontale scheibenförmige Oberseite des Basisteiles, wobei die klebende Seite der Etikettenscheibe nach oben weist und die Etikettenscheibe mit ihrer zentralen Öffnung über das Zentrierelement geschoben wird,
2. Abziehen einer Schutzfolie von der klebenden Seite der Etikettenscheibe,
3. Auflegen der Compact Disc mit ihrer Etikettierseite nach unten auf das Positionierteil, wobei die Compact Disc mit ihrer zentralen Öffnung über den Zentrierstab geschoben wird und auf dem Zentrierelement aufliegt, und wobei der Abstand zwischen Etikettenscheibe und Compact Disc durch die Höhe, mit der das Zentrierelement über die scheibenförmige Oberseite in der Ruhestellung hinausragt, bestimmt wird,
4. Herunterdrücken des Positionierungsteils mit auf dem Zentrierelement aufgelegter Compact Disc aus der Ruhestellung in vertikaler Richtung in die Etikettierstellung auf die Klebeseite der Etikettenscheibe,
5. Entlastung des Positionierteils, wobei das Positionierteil durch die Federzungen am Außenring in die Ruhestellung zurückspringt und dabei die auf dem Zentrierelement liegende etikettierte Compact Disc von der Oberseite des Basisteiles abhebt.

Dieses Verfahren zum Etikettieren einer Compact Disc unter Verwendung der erfindungsgemäßen Vorrichtung hat den Vorteil, dass eine sichere zentrierte Positionierung der Etikettenscheibe auf der Compact Disc möglich wird, ohne einerseits die Etikettenscheibe zu beschädigen und andererseits ohne die Gefahr einer dezentrierten Aufklebung der Etikettenscheibe. Außerdem ist die Gefahr des Verkantens der Compact Disc vermindert, da die Positioniereinheit eine kompakte festgefügte Einheit aus Zentrierelement und Zentrierstab darstellt, wobei das Zentrierelement eine Fläche definiert, auf der die Compact Disc planparallel zu der Etikettenscheibe während des gesamten Vorgangs der Etikettierung ausgerichtet bleibt, so dass ein Verkanten der Compact Disc ausgeschlossen ist.

Ein Verfahren zur Herstellung einer Etikettiervorrichtung für Compact Discs weist vorzugsweise folgende Verfahrensschritte auf:
1. Bereitstellen einer zweiteiligen Spritzgussform mit einer Unterform und einer Oberform, die in zusammengefahrenem und abgedichtetem Zustand eine Hohlform bilden, wobei die Hohlform der Form der Etikettiervorrichtung entspricht,
2. Einspritzen von Kunststoff in die geschlossene Spritzgussform unter Auffüllen der Hohlform mit Kunststoff,
3. Öffnen der zweiteiligen Spritzgussform und Entfernen der fertigen Etikettiervorrichtung aus Kunststoff.

Aufgrund der erfindungsgemäßen Konstruktion der Etikettiervorrichtung, ist es möglich, mit einem einzigen Spritzgussvorgang die komplette Etikettiervorrichtung herzustellen, ohne dass eine Nachbearbeitung erforderlich wird. Bei dem Einspritzen des Kunststoffs in die Spritzgussform können die Spritzgusseinlässe derart positioniert werden, dass sie die äußere Gestalt der Etikettiervorrichtung nicht beeinträchtigen.

Weitere Merkmale und Vorteile der vorliegenden Erfindung werden nun anhand von Ausführungsformen mit Bezug auf die beiliegenden Zeichnungen näher erläutert.
- Figur 1: zeigt in perspektivischer Ansicht eine schematische Darstellung einer ersten Ausführungsform der Erfindung in ihrer Ruhestellung.
- Figur 2: zeigt in perspektivischer Ansicht eine schematische Darstellung der ersten Ausführungsform der Erfindung in einem Übergangszustand von der Ruhestellung in die Etikettierstellung.
- Figur 3: zeigt einen schematischen Querschnitt der ersten Ausführungsform der Erfindung nach Figur 1 in Ruhestellung.
- Figur 4: zeigt einen schematischen Querschnitt der ersten Ausführungsform der Erfindung nach Figur 1 in der Etikettierstellung.
- Figur 5: zeigt in perspektivischer Ansicht eine schematische Darstellung einer zweiten Ausführungsform der Erfindung in ihrer Ruhestellung.
- Figur 6: zeigt in perspektivischer Ansicht eine schematische Darstellung der zweiten Ausführungsform der Erfindung in einem Übergangszustand von der Ruhestellung in die Etikettierstellung.
- Figur 7: zeigt in perspektivischer Ansicht eine schematische Darstellung einer dritten Ausführungsform der Erfindung in ihrer Ruhestellung.
- Figur 8: zeigt in perspektivischer Ansicht eine schematische Darstellung der dritten Ausführungsform der Erfindung in einem Übergangszustand von der Ruhestellung in die Etikettierstellung.
- Figur 9: zeigt in perspektivischer Ansicht eine schematische Darstellung einer vierten Ausführungsform der Erfindung in ihrer Ruhestellung.
- Figur 10: zeigt in perspektivischer Ansicht eine schematische Darstellung einer vierten Ausführungsform der Erfindung in einem Übergangszustand von der Ruhestellung in die Etikettierstellung.
- Figur 11: zeigt eine perspektivische Ansicht einer schematischen Darstellung einer fünften Ausführungsform der Erfindung in ihrer Ruhestellung.
- Figur 12: zeigt eine perspektivische Ansicht einer schematischen Darstellung der fünften Ausführungsform der Erfindung in einem Übergangszustand von der Ruhestellung in die Etikettierstellung.
- Figur 13: zeigt einen schematischen Querschnitt durch eine sechste Ausführungsform der Erfindung in ihrer Ruhestellung.
- Figur 14: zeigt einen schematischen Querschnitt der sechsten Ausführungsform der Erfindung in ihrer Etikettierstellung.

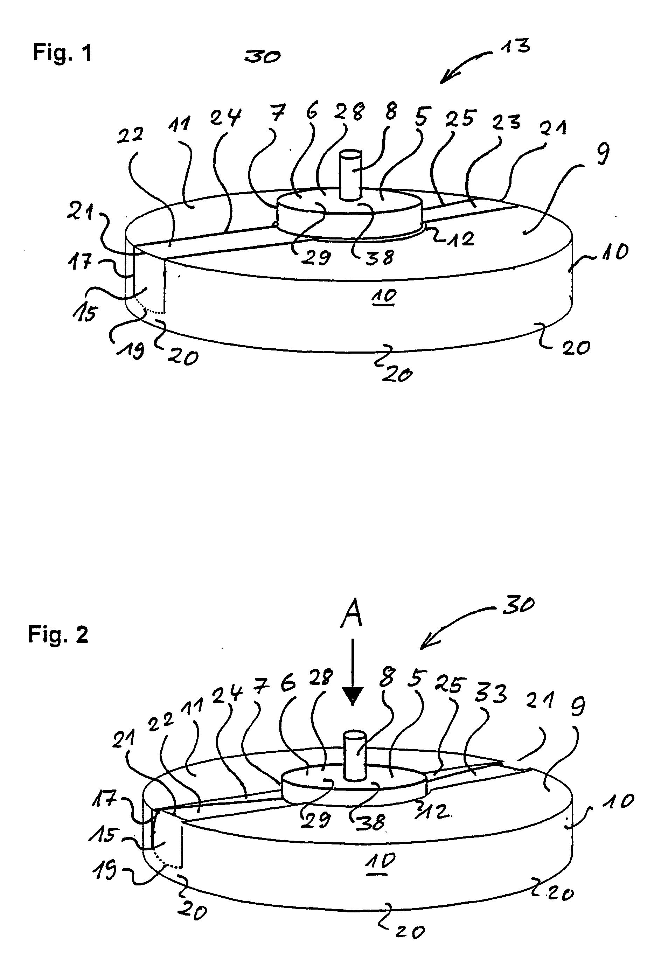

Figur 1 zeigt in perspektivischer Ansicht eine schematische Darstellung einer ersten Ausführungsform der Erfindung in ihrer Ruhestellung. In Figur 1 bezeichnet das Bezugszeichen 5 ein Positionierteil, das Bezugszeichen 7 ein Zentrierelement und das Bezugszeichen 8 einen Zentrierteil in Form eines Zentrierstabs, wobei Zentrierelemente und Zentrierstab mit dem Positionierteil eine einstückige Einheit bilden.

Das Bezugszeichen 9 bezeichnet ein Basisteil, auf dem die Etikettenscheibe mit dem Etikett nach unten abgelegt werden kann, wobei das Basisteil einen Außenring 9 mit einer scheibenförmigen Oberseite 10 aufweist. In den Außenring sind zwei Federzungen eingearbeitet, von denen die Federzunge 15 in der perspektivischen Darstellung der Figur 1 zu sehen ist. Die Federzunge 15 weist eine Federzungenwurzel 19 und eine Federzungenspitze 21 auf. Die Federzunge ist einstückig aus dem Material des Außenringes 10 gebildet und in einer Aussparung 17 des Außenringes angeordnet und kann durch einfaches Schlitzen des Außenringen hergestellt werden oder beim Spritzgießen durch Unterteilen des Außenringes in Außenringbereich und Federzungenbereiche verwirklicht werden. Die Federzungenspitzen sind über flexible Tragbalken 22 und 23 mit dem Positionierteil 5 verbunden. Somit ist praktisch das Positionierteil 5 an den Zungenspitzen der Zungenfedern über die Tragbalken 22 und 23 aufgehängt. Die scheibenförmige Oberseite des Außenringes ist somit unterteilt in einen fixierten Teil, der eine Compact Disc aufnehmen kann, wobei die scheibenförmige Oberseite eine Zentrumsöffnung aufweist, in der das Positionierteil angeordnet ist, und Aussparungen 24 und 25 aufweist, in denen die Tragbalken untergebracht sind. In dieser ersten Ausführungsform der Erfindung weist das Positionierteil ein sockelförmiges Zentrierelement 7 auf, wobei das Sockel durch eine ebene Platte 38 abgeschlossen wird, in deren Zentrum der Zentrierstab 8 angeordnet ist. Auf der ebenen Platte kann somit eine Compact Disc zentriert zu dem ringförmigen Sockel, der seinerseits die Etikettenscheibe ausrichten kann, aufgelegt werden.

Zum Etikettierung wird zunächst die Etikettenscheibe mit ihrem Etikett nach unten auf das Basisteil aufgelegt und anschließend die Compact Disc mit ihrer Etikettieroberseite nach unten zentriert über den Zentrierstab 8 auf der ebenen Platte 38 auf der Sockeloberfläche 29 des ringförmigen Sockels 28 abgelegt.

Figur 2 zeigt in perspektivischer Ansicht eine schematische Darstellung der ersten Ausführungsform der Erfindung in einem Übergangszustand von der Ruhestellung in die Etikettierstellung. Die Komponenten, die gleiche Funktionen erfüllen wie in Figur 1, sind mit gleichen Bezugszeichen gekennzeichnet und werden deshalb nicht erneut erläutert. Zum Übergang von der Ruhestellung in die Etikettierstellung wird in Pfeilrichtung A das Positionierteil 5 in die Zentrumsöffnung 12 der scheibenförmigen Oberseite 9 des Außenringes 10 gedrückt. Dabei werden die Federzungenspitzen 15 und 16 an dem Außenring 10 nach innen gedrückt und vorgespannt. Da die Federzungen selbst einen konkaven Querschnitt aufweisen aufgrund des Durchmessers des Außenringes, ist zum Übergang von der Ruhestellung in die Etikettierstellung ein Druckpunkt zu überwinden. Dieser Druckpunkt stellt gleichzeitig sicher, dass nicht aus Versehen beim Montieren bzw.

Zentrieren der Etikettenscheibe und der Compact Disc bereits ein Absenken des Positionierteils 5 in vertikaler Richtung folgen kann. Zwar ist zunächst das Auflegen der Etikettenscheibe auf die scheibenförmige Oberseite 9 des Außenringes 10 unkritisch, weil üblicherweise die Etikettenscheiben auf ihrer klebenden Seite eine Schutzfolie aufweisen. Jedoch schon beim Abziehen der Schutzfolie von der auf der scheibenförmigen Oberseite liegenden Etikettenscheibe besteht die Gefahr des unabsichtlichen Niederdrückens des Positionierteils, so dass sich die Etikettenscheibe verschiebt, federnd angehoben wird und somit nicht mehr zentriert und mit glatter Oberfläche auf der scheibenförmigen Oberseite 11 des Außenringes aufliegt. Diese Gefahr wird mit der vorliegenden Vorrichtung verhindert, da die am Außenring 10 angeordneten Federzungen 15 aufgrund ihres konkaven Querschnitts einen Druckpunkt aufweisen, der vom Benutzer ein bewusstes Niederdrücken in Pfeilrichtung A des Positionierteils 5 erfordert, um den Etikettiervorgang zu bewirken. Der weitere Vorteil dieser Vorrichtung mit den konkav gebogenen Federzungen am Außenring liegt darin, dass nach erfolgter Etikettierung das Positionierteil 5 in eine stabile Ruhelage zurückschnappt. Der Außenumfang des massiven ringförmigen Sockels 28 und des auf dem Sockel angeordneten Zentrierstabes 8 sorgen dafür, dass keinerlei Verschiebung der aufeinander zentrierten Etikettenscheibe und der Compact Disc beim Übergang von der Ruhestellung zur Etikettierstellung möglich ist. Somit vereinfacht die vorliegende Vorrichtung die Handhabung beim Etikettieren von Compact Discs und stellt sicher, dass der Benutzer bei manueller Etikettierung eine unwuchtfreie etikettierte Compact Disc herstellen kann.

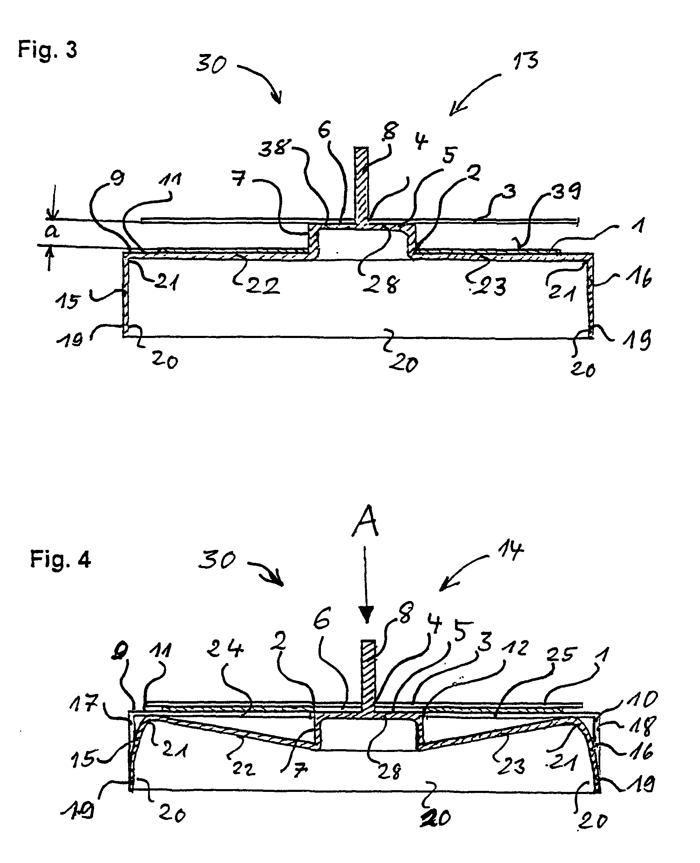

Figur 3 zeigt einen schematischen Querschnitt der ersten Ausführungsform der Erfindung nach Figur 1 in Ruhestellung. Komponenten, die gleiche Funktionen wie in den Figuren 1 und 2 erfüllen, werden mit gleichen Bezugszeichen gekennzeichnet und nicht erneut erläutert. Das Bezugszeichen 1 kennzeichnet eine Etikettenscheibe mit einer zentralen Öffnung 2 in der Etikettenscheibe, wobei die Etikettenscheibe mit ihrer klebenden Oberseite 39 nach oben auf der scheibenförmigen Oberseite 9 des Außenringes 10 angeordnet ist. Das Bezugszeichen 3 kennzeichnet eine Compact Disc mit einer zentralen Öffnung 4 in der Compact Disc, durch die der Zentrierstab 8 des Positionierteils 5 hindurchragt. Der Zentrierstab 8 kann in Längsrichtung einen schwach verjüngten Querschnitt aufweisen, wobei die Steigung der Verjüngung zwischen 0,5 und 5 Grad beträgt. Eine derartige Verjüngung vereinfacht das Positionieren der Compact Disc 3 mit ihrer zentralen Öffnung 4 auf dem Zentrierelement 7, das in dieser ersten Ausführungsform sockelförmig ausgebildet ist und eine ebene Platte 38 zum Tragen der Compact Disc aufweist, so dass die Compact Disc 3 in einem Abstand a von der klebenden Oberfläche 39 der Etikettenscheibe 1 gehalten wird. Der Abstand a entspricht der Höhe des ringförmigen Sockels, mit der dieser über die scheibenförmige Oberfläche 11 des Außenringes 10 herausragt. Aufgrund der Druckpunkteigenschaften der Federzungen 15 und 16 können sowohl die Etikettenscheibe 1 als auch die Compact Disc 3 sicher mit Hilfe des Positionierteils 5 in der Ruhestellung der Vorrichtung montiert werden.

Figur 4 zeigt einen schematischen Querschnitt der ersten Ausführungsform der Erfindung nach Figur 1 in Etikettierstellung 14. Dazu wird in Pfeilrichtung A auf das Positionierteil mit der zentriert angeordneten Compact Disc 3 ein Druck ausgeübt, so dass das Positionierteil an den Tragbalken 22 und 23 hängend in die Zentrumsöffnung 12 der scheibenförmigen Oberseite 11 des Außenringes 10 gedrückt wird. Dabei wird ein Druckpunkt der Federzungen 15 und 16 überwunden und die Federzungenspitzen 21 biegen sich radial einwärts in Richtung auf das Positionierteil, da sie über die flexiblen Tragbalken 22 und 23 mit dem Positionierteil 5 verbunden sind. Die geometrischen Abmessungen des Positionierteiles 5 bleiben bei diesem Vorgang erhalten, so dass sich der Außendurchmesser des ringförmigen Sockels und der Außendurchmesser des Zentrierstabes 8 nicht verändert. Sobald das Andrücken der Compact Disc 3 auf die Etikettenscheibe 1 in der Etikettierstellung beendet ist, und das Positionierteil entlastet wird, federt das Positionierteil, das an den Tragbalken 22 und 23 hängt, durch die Wirkung der Federzungen 15 und 16 des Außenringes 10. Dazu sind die Federzungen 15 und 16 mit ihren Zungenwurzeln 19 im Fußbereich 20 des Außenringes 10 fest verankert. Diese feste Verankerung kann durch einstückige Herstellung des Außenringes mit Federzungen erreicht werden.

Nach dem Aufpressen der Compact Disc 3 auf die klebende Seite 39 der Etikettenscheibe 1 kann das Positionierteil 5 entlastet werden und federt durch die Federwirkung der Federzungen 15 und 16 zurück in die Ruhelage, so dass die etikettierte Compact Disc 3 problemlos von der Etikettiervorrichtung aufgrund der Verjüngung des Zentrierstabes abgenommen werden kann.

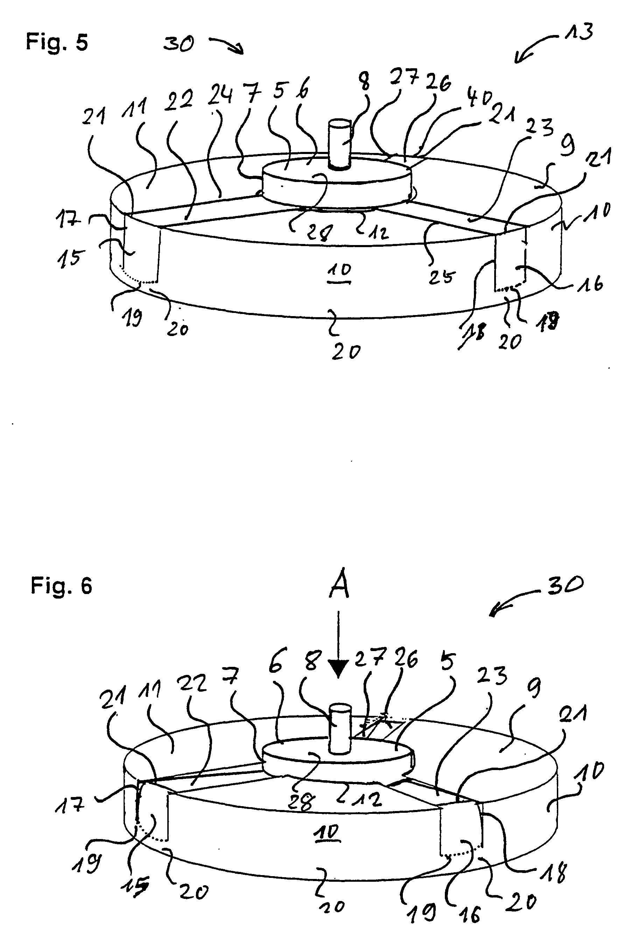

Figur 5 zeigt in perspektivischer Ansicht eine schematische Darstellung einer zweiten Ausführungsform der Erfindung in ihrer Ruhestellung. Komponenten in Figur 5, die gleiche Funktionen wie in den vorangegangenen Figuren aufweisen, werden mit den gleichen Bezugsziffern gekennzeichnet und nicht weiter erläutert. Die zweite Ausführungsform der Erfindung, die in Figur 5 gezeigt wird, unterscheidet sich von der ersten Ausführungsform der Erfindung, dass anstelle von zwei gegenüberliegenden Federzungen auf dem Außenring 10 des Basisteiles nun drei Federzungen 15, 16 und 40 gleichmäßig am Umfang des Außenringes 10 verteilt angeordnet sind. Die zweite Ausführungsform hat den Vorteil, dass das Positionierteil 5 eine Dreipunktaufhängung aufgrund der drei Tragbalken 22, 23 und 26 aufweist und somit die Führung des Positionierteils beim Übergang von der Ruhestellung 13 in die Etikettierstellung stabil ist.

Figur 6 zeigt in perspektivischer Ansicht eine schematische Darstellung der zweiten Ausführungsform der Erfindung in einem Übergangszustand von der Ruhestellung in die Etikettierstellung. Dazu wird in Pfeilrichtung A ein Druck auf das Positionierteil 5 ausgeübt, wodurch sich die Federzungenspitzen 21 radial nach innen federn, nachdem ihr Druckpunkt überwunden ist. Gleichzeitig versinkt das Positionierteil mit seinem positionierenden ringförmigen Sockel 28 in der Zentrumsöffnung 12 auf der Oberseite 11 des Basisteiles 9. Wird das Positionierteil 5 entlastet, so federt es zurück in seine Ruhestellung.

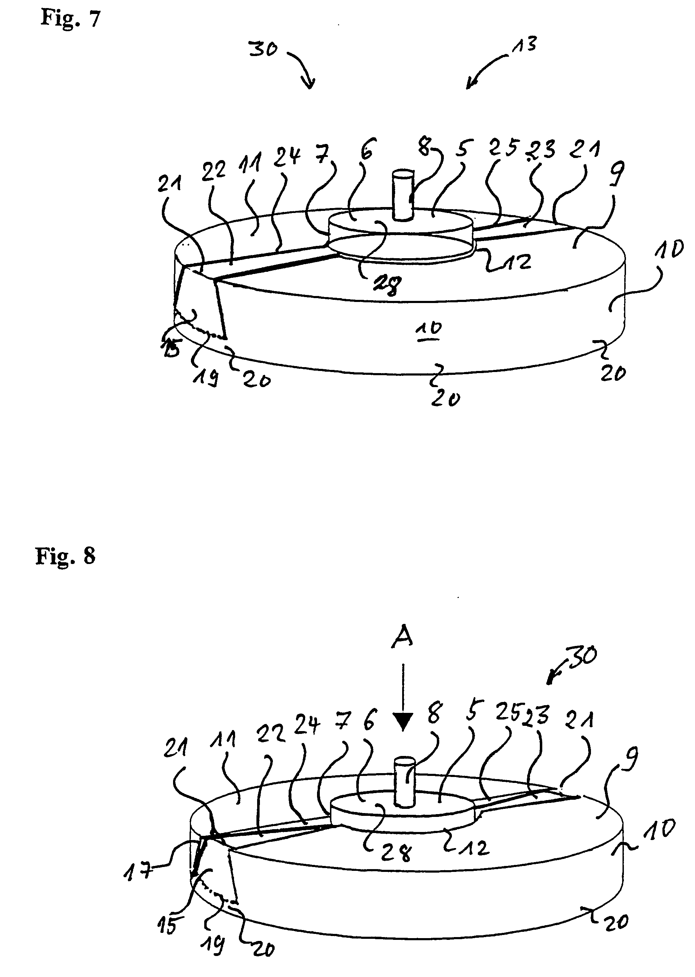

Figur 7 zeigt in perspektivischer Ansicht eine schematische Darstellung einer dritten Ausführungsform der Erfindung in ihrer Ruhestellung. Komponenten der Figur 7, die gleiche Funktionen wie in den Figuren 1 bis 6 erfüllen, werden mit gleichen Bezugsziffern gekennzeichnet und eine erneute Erläuterung wird weggelassen. Die dritte Ausführungsform unterscheidet sich von den ersten beiden Ausführungsformen der Erfindung dadurch, dass die Federzungen 15 und 16 an der Federzungenwurzel 19 breiter sind als an der Federzungenspitze 21. Damit wird erreicht, dass die Federzunge an ihrer Federzungenspitze 21 eine geringere Rückstellkraft besitzt als die Federwurzel 19. Damit wird die Feder weicher, jedoch bleibt der Druckpunkt im wesentlichen erhalten, so dass in der Ruhestellung ein sicheres Montieren von Etikettenscheibe und Compact Disc möglich wird und mit einem leichten Druck auf den Zentrierstab 8 das Positionierteil 5 in die Zentrumsöffnung 12 der Oberseite 12 des Basisteiles 9 gedrückt werden kann.

Darüber hinaus zeigt Figur 7, dass die Tragbalken 22 und 23 sich radial einwärts verjüngen. Mit dieser Verjüngung wird die Flexibilität der Tragbalken 21 und 23 erhöht, so dass mit dieser Massnahme ebenfalls der Gegendruck auf das Zentrierteil beim Übergang von der Ruhestellung in die Etikettierstellung vermindert wird. Ferner werden die Verformungskräfte auf das Zentrierteil 5 durch die Tragbalken 22 und 23 aufgrund dieser sich radial nach innen erstreckenden Verjüngung vermindert.

Figur 8 zeigt in perspektivischer Ansicht eine Darstellung der dritten Ausführungsform der Erfindung in einem Übergangszustand von der Ruhestellung in die Etikettierstellung. Gleiche Komponenten der Figur 8, wie sie in den Figuren 1 bis 7 gezeigt werden, werden mit gleichen Bezugsziffern gekennzeichnet und eine Erläuterung wird weggelassen.

In Figur 8 wird in Pfeilrichtung A ein Anpressdruck auf das Positionierteil ausgeübt und damit die auf dem Positionierteil angeordnete Compact Disc heruntergedrückt. Gleichzeitig mit dem Herunterdrücken des Positionierteils 5 wölben sich die Federelemente 15 und 16 an ihren Federzungenspitzen radial nach innen ein und befestigt an den sich verjüngenden Tragbalken 22 und 23 wird das Zentrierteil 5 geführt in der Öffnung 12 heruntergelassen. Die Rückstellkraft der Zungenfedern auf dem Außenring 20 ist durch die breitere Ausbildung der Federzungenwurzel nicht geschwächt, so dass beim Entlasten des Zentrierteils 5 dieses in seine Ruhestellung zurückfedert.

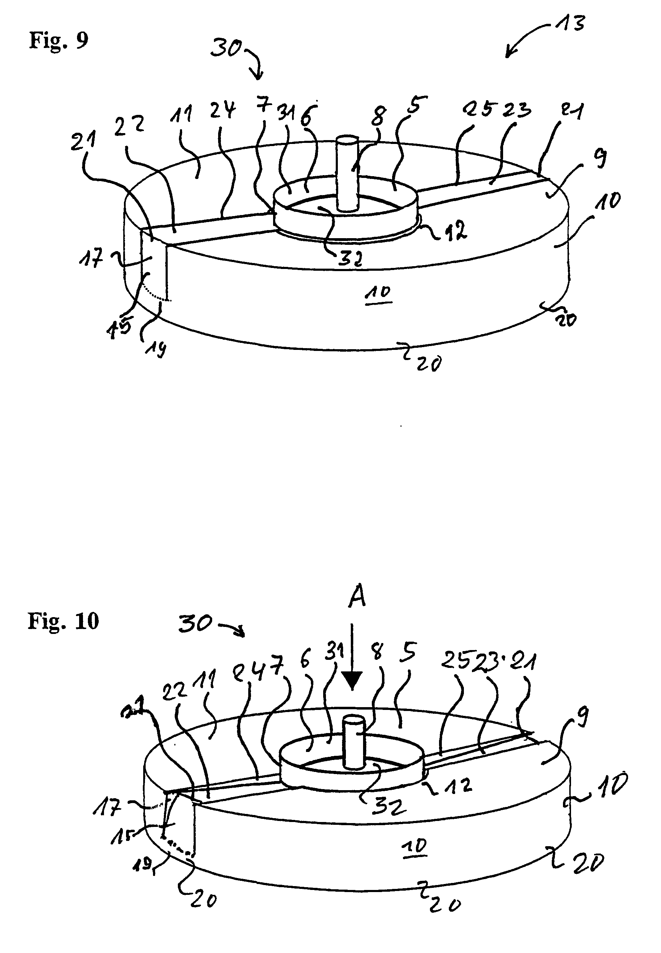

Figur 9 zeigt in perspektivischer Ansicht eine schematische Darstellung einer vierten Ausführungsform der Erfindung in ihrer Ruhestellung. Komponenten der Figur 9, die gleiche Funktionen wie in den vorhergehenden Figuren ausüben, werden mit gleichen Bezugsziffern gekennzeichnet. Eine Erörterung dieser Komponenten wird im folgenden weggelassen.

Der Unterschied der vierten Ausführungsform der Erfindung gegenüber den vorhergehenden Ausführungsformen der Erfindung besteht im wesentlichen darin, dass das Positionierteil anstelle eines Zentriersockels oder ringförmigen Sockels nun lediglich einen Zentrierring 31 aufweist. Dieser Zentrierring steht auf einer Grundplatte 32, die mit den Tragbalken 22 und 23 verbunden ist, wodurch das Positionierelement mit den Zungenfederspitzen 21 der Zungenfedern 15 und 16 verbunden ist und in Ruhestellung 13 gehalten wird. Zum Etikettieren einer Compact Disc wird eine Etikettenscheibe mit dem Etikett nach unten auf das Basisteil 9 aufgelegt und dabei durch den Zentrierring 31 gegenüber dem Zentrum des Positionierteils befindlichen Zentrierstab 8 zentriert. Auf den Zentrierring 31 kann die Compact Disc planparallel zu der Etikettenscheibe aufgelegt werden, wobei die Ringstärke den Abstand zwischen Compact Disc und Etikettenscheibe in der Ruhestellung 13 definiert. Beim Absenken des Zentrierstiftes 8 mit dem Positionierteil 5 wird die Compact Disc auf die Etikettenscheibe abgesenkt und mit der Etikettenscheibe verklebt.

Figur 10 zeigt in perspektivischer Ansicht eine schematische Darstellung der vierten Ausführungsform der Erfindung in einem Übergangszustand von der Ruhestellung in die Etikettierstellung. Da durch Niederdrücken in die Pfeilrichtung A das Positionierteil in der Zentrumsöffnung des Basisteiles 9 abgesenkt wird, kommt es zu dem Auflegen der Compact Disc auf die klebende Seite der Etikettenscheibe. Aufgrund der Federwirkung der Federzungen 15 und 16 auf dem Außenring 10 wird nach dem Verkleben der Etikettenscheibe auf der Compact Disc die etikettierte Compact Disc in die Ruhestellung angehoben und kann von der Etikettiervorrichtung abgenommen werden.

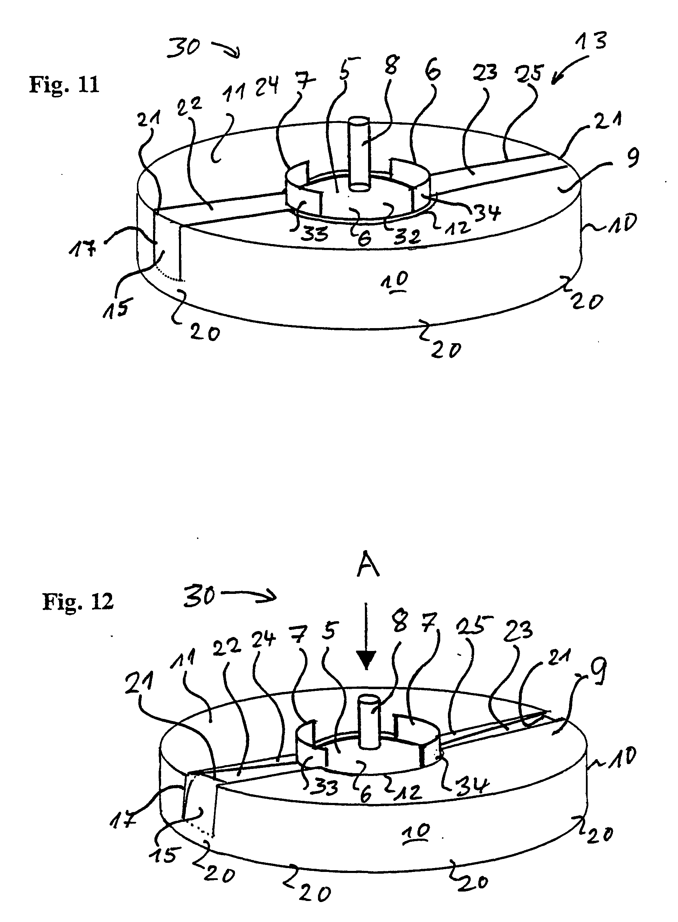

Figur 11 zeigt eine perspektivische Ansicht einer schematischen Darstellung einer fünften Ausführungsform der Erfindung in ihrer Ruhestellung. Komponenten der Figur 11, die gleiche Funktionen wie in den folgenden Figuren ausüben, werden mit gleichen Bezugsziffern bezeichnet und eine Erörterung derselben wird weggelassen. Der Unterschied der fünften Ausführungsform zu den vorhergehenden Ausführungsformen besteht darin, dass der Zentrierring nicht mehr komplett durchgeführt ist, sondern sich lediglich Zentrierringsegmente in Form von Kreisringsegmenten 33 und 34 auf der Grundplatte 32 des Positionierteils 5 befinden. Diese Kreisringsegmente reichen vollständig aus, um eine Compact Disc in einem Abstand zu einer Etikettenscheibe zu halten, außerdem weist die fünfte Ausführungsform der Erfindung nach Figur 11 in dem Zentrum der Grundplatte einen Zentrierstab 8 auf, der die Compact Disc im Verhältnis zu der Etikettenscheibe zentriert.

Figur 12 zeigt eine perspektivische Ansicht einer schematischen Darstellung der fünften Ausführungsform der Erfindung in einem Übergangszustand von der Ruhestellung in die Etikettierstellung. Dabei versinkt unter der Kraft in Pfeilrichtung A das Positionierteil 5 der Etikettiervorrichtung 30 in der Zentrumsöffnung des Basisteiles 9, so dass die auf den Ringsegmenten ruhende Compact Disc auf die Etikettenscheibe, die auf dem Basisteil angeordnet ist, gepresst werden kann. Aufgrund der Federzungen 15 und 16, an deren Zungenspitzen 21 Tragbalken hängen, die das Positionierteil 5 tragen, federt das Positionierteil 5 zurück in die Ruhestellung, sobald keine Kraft in Pfeilrichtung A auf das Positionierteil wirkt.

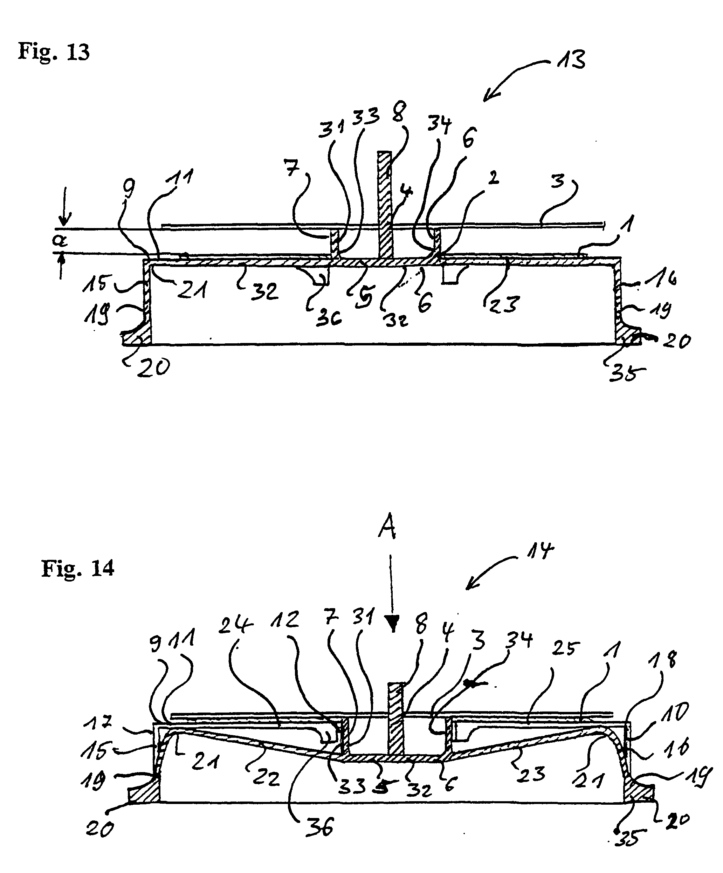

Figur 13 zeigt einen schematischen Querschnitt durch eine sechste Ausführungsform der Erfindung in ihrem Ruhezustand. Gleiche Komponenten in Figur 13, die die gleiche Funktion wie in den vorhergehenden Ausführungsformen erfüllen, werden mit gleichen Bezugsziffern gekennzeichnet und eine Erörterung weggelassen. In der Querschnittsansicht der Figur 13 sind sowohl die Compact Disc 3 als auch die Etikettenscheibe 1in ihrer Ruhestellung skizziert, wobei sie planparallel zueinander ausgerichtet sind und einen Abstand a einhalten, der durch die Höhe des Zentrierringes 31 bestimmt wird. Anstelle eines geschlossenen Zentrierringes können auch Kreisringsegmente 33 und 34 vorgesehen sein und die gleiche Wirkung erzeugen, nämlich dass die Compact Disc 3 mit ihrer zentralen Öffnung 4 zentriert zu der Etikettenscheibe 1 mit ihrer zentralen Öffnung 2 gehalten wird. Die sechste Ausführungsform unterscheidet sich von den Ausführungsformen der vorhergehenden Figuren durch einen verstärkten Fußbereich 20 des Außenringes 10 und durch eine Verstärkung im Bereich der Zentrumsöffnung der scheibenförmigen Oberseite 11 des Außenringes 10. Diese Verstärkung des Randes der Zentrumsöffnung 12 dient der Stabilisierung der scheibenförmigen Oberseite des Basisteiles 9, so dass in vorteilhafter Weise gewährleistet ist, dass beim Absenken des Positionierteils 5 die Compact Disc zentriert auf die Etikettenscheibe 1 aufgebracht werden kann.

Figur 14 zeigt einen schematischen Querschnitt der sechsten Ausführungsform der Erfindung in ihrer Etikettierstellung. Komponenten der Figur 14, die gleiche Funktionen wie in den vorhergehenden Figuren aufweisen, werden mit gleichen Bezugsziffern gekennzeichnet und nicht näher erläutert. In der sechsten Ausführungsform wird die Form und Planarität der Oberseite 11 des Basisteiles 9 durch die Verstärkung 36 verbessert, und durch die Verstärkung 35 des Fußbereiches 20 wird die Standfestigkeit der Vorrichtung verbessert sowie die Resistenz gegenüber Rissbildung im Bereich der Federzungen 15 und 16 erhöht. Neben der Verstärkung in radialer Richtung sowohl im Fußbereich 20 des Außenringes 10 als auch im Bereich der Zentrumsöffnung 12 des Basisteiles 9 können auch Rippen vorgesehen werden, die sich radial vom Außenring zu der zentralen Öffnung 12 erstrecken. Eine weitere Möglichkeit besteht darin, dass vor dem Aufbringen der Etikettenscheibe eine Ausgleichsscheibe auf das Basisteil 9 gelegt wird und erst dann die Etikettenscheibe aufgebracht wird. Eine solche Ausgleichsscheibe besitzt die gleiche zentrale Öffnung wie eine Etikettenscheibe und wird durch das Positionierteil 5 zentriert und sorgt dafür, dass die Aussparungen 24 und 25 auf der Oberseite 11 des Basisteiles 9 überbrückt werden.

Die Merkmale der oben beschriebenen bevorzugten Ausführungsformen können auch miteinander kombiniert werden.

Der in der obigen Beschreibung verwendete Begriff "Compact Disc" schließt alle scheibenförmigen Datenträger ein, wie z.B. DVD und CD-ROM.

### Bezugszeichenliste

- 1: Etikettenscheibe
- 2: zentrale Öffnung der Etikettenscheibe
- 3: Compact Disc
- 4: zentrale Öffnung der Compact Disc
- 5: Positionierteil
- 6: einstückige Einheit
- 7: Zentrierelement
- 8: Zentrierteil
- 9: Basisteil
- 10: Außenring
- 11: scheibenförmige Oberseite
- 12: Zentrumsöffuung auf der Oberseite
- 13: Ruhestellung
- 14: Etikettierstellung
- 15 und 16: Federzungen
- 17 und 18: erste Aussparungn im Außenring
- 19: Zungenwurzel
- 20: Fußbereich des Außenringes
- 21: Zungenspitzen
- 22 und 23: Tragbalken
- 24 und 25: zweite Aussparung in der Oberseite
- 26: Tragbalken
- 27: Aussparung in der Oberseite
- 28: ringförmiger Sockel
- 29: Sockeloberfläche
- 30: Vorrichtung zum Etikettieren
- 31: Zentrierring
- 32: Grundplatte des Zentrierringes
- 33 und 34: Kreisringsegmente
- 35: Außenflansch
- 36: Verstärkung
- 37: Umfang des Außenringes
- 38: Ebene Platte des Sockels
- 39: Klebende Oberseite der Etikettenscheibe
- 40: Federzunge
- A: Pfeilrichtung

## Patentansprüche

1. Vorrichtung zum Auflegen einer Etikettenscheibe (1) mit einer ersten zentralen Öffnung (2) auf eine Compact Disc (3) mit einer zweiten zentralen Öffnung (4), wobei die Vorrichtung aufweist:
ein Positionierteil (5), das mindestens ein Zentrierelement (7) aufweist, dessen Außenabmessung der ersten zentralen Öffnung (2) der Etikettenscheibe (1) angepasst ist und das in seinem Zentrum ein Zentrierteil (8) aufweist, dessen Außendurchmesser der zweiten zentralen Öffnung (4) der Compact Disc (3) angepasst ist und der über das Zentrierelement (7) hinausragt,
ein Basisteil (9) mit einem Außenring (10), der eine scheibenförmige Oberseite (11) trägt, auf welcher die Etikettenscheibe (1) angeordnet werden kann, wobei die Oberseite (11) eine Zentrumsöffnung (12) aufweist, in der das Positionierteil (5) senkrecht zur Oberseite (11) bewegbar angeordnet ist und in einer Ruhestellung (13) über die Oberseite (11) hinausragt und in einer Etikettierstellung (14) in die Zentrumsöffnung (12) abgesenkt ist,
**dadurch gekennzeichnet, dass**
der Außenring (10) mindestens eine Federzunge (15, 16) in einer ersten angepassten Aussparung (17, 18) des Außenrings (10) aufweist, deren Zungenwurzel (19) an einem Fußbereich (20) des Außenringes (10) befestigt ist und deren Zungenspitze (21) einen flexiblen Tragbalken (22, 23) trägt, wobei sich der Tragbalken (22, 23) von der Zungenspitze (21) radialeinwärts in einer zweiten angepassten Aussparung (24, 25) der Oberseite (11) bis zu dem Positionierteil (5) erstreckt.

2. Vorrichtung nach Anspruch 1, **dadurch gekennzeichnet, dass** der Querschnitt der Federzungen (15, 16) konkav gewölbt ist und jede Federzunge (15, 16) einen Druckpunkt aufweist.

3. Vorrichtung nach Anspruch 1 oder Anspruch 2, **dadurch gekennzeichnet, dass** das Positionierungsteil (5) mit Zentrierelement (7) und Zentrierteil (8) eine einstückige Einheit (6) ist.

4. Vorrichtung nach einem der vorhergehenden Ansprüche, **dadurch gekennzeichnet, dass** das Zentrierelement (7) und das Zentrierteil (8) miteinander senkrecht zur Oberseite (11) bewegbar sind.

5. Vorrichtung nach einem der vorhergehenden Ansprüche, **dadurch gekennzeichnet, dass** das Zentrierelement (7), das Zentrierteil (8), der flexible Tragbalken (22, 23, 26), die Federzunge (15, 16) und der Außenring (10) unlösbar miteinander verbunden sind.

6. Vorrichtung nach einem der vorhergehenden Ansprüche, **dadurch gekennzeichnet, dass** die Vorrichtung (30) einstückig ist.

7. Vorrichtung nach einem der vorhergehenden Ansprüche, **dadurch gekennzeichnet, dass** die Vorrichtung (30) ein einziges Spritzgussteil ist.

8. Vorrichtung nach einem der vorhergehenden Ansprüche, **dadurch gekennzeichnet, dass** das Positionierteil (7) einen ringförmigen Sockel (28) als Zentrierelement aufweist, aus dessen Oberfläche (29) im Zentrum das Zentrierteil (8) herausragt.

9. Vorrichtung nach einem der vorhergehenden Ansprüche, **dadurch gekennzeichnet, dass** das Zentrierelement (7) ein Ring (31) ist, der eine Grundplatte (32) aufweist, in deren Zentrum das Zentrierteil (8) angeordnet ist.

10. Vorrichtung nach einem der vorhergehenden Ansprüche, **dadurch gekennzeichnet, dass** der Abstand zwischen Compact Disc (3) und Etikettenscheibe (1) der Höhe des Zentrierelements (7) entspricht, um welche das Zentrierelement (7) über die Oberseite (11) des Außenringes (10) hinausragt.

11. Vorrichtung nach einem der vorhergehenden Ansprüche, **dadurch gekennzeichnet, dass** das Zentrierelement (7) mindestens zwei Kreisringsegmente (33, 34) aufweist, die über die Oberseite (11) des Außenringes (10) hinausragen und über eine kreisförmige Grundplatte (32) miteinander verbunden sind.

12. Vorrichtung nach einem der vorhergehenden Ansprüche, **dadurch gekennzeichnet, dass** sich der Tragbalken (22, 23, 26) radialeinwärts zum Positionierteil (5) hin verjüngt.

13. Vorrichtung nach einem der vorhergehenden Ansprüche, **dadurch gekennzeichnet, dass** die Federzunge (15, 16) in dem Zungenwurzelbereich (19) breiter ist als in dem Zungenspitzenbereich (21).

14. Vorrichtung nach einem der vorhergehenden Ansprüche, **dadurch gekennzeichnet, dass** der Außenring (10) an dem Fußbereich (20) verstärkt ist.

15. Vorrichtung nach einem der vorhergehenden Ansprüche, **dadurch gekennzeichnet, dass** der Außenring (10) in dem Fußbereich (20) einen Außenflansch (34) aufweist

16. Vorrichtung nach einem der vorhergehenden Ansprüche, **dadurch gekennzeichnet, dass** in dem Randbereich der Zentrumsöffnung (12) der Oberseite (11) eine Verstärkung (36) an der Unterseite angeordnet ist.

17. Vorrichtung nach einem der vorhergehenden Ansprüche, **dadurch gekennzeichnet, dass** mindestens drei Federzungen (15, 16) mit drei flexiblen Tragbalken (22, 23, 26) auf dem Umfang des Außenringes (10) verteilt angeordnet sind.

18. Verfahren zur Verwendung der Vorrichtung nach einem der Ansprüche 1 bis 17 zum Etikettieren einer Compact Disc (3), das folgende Verfahrensschritte aufweist:
- Auflegen der Etikettenscheibe (1) mit Etikett nach unten auf die horizontale scheibenförmige Oberseite (11) des Basisteiles (9), wobei die klebende Seite der Etikettenscheibe (1) nach oben weist und die Etikettenscheibe (1) mit ihrer zentralen Öffnung (2) über das Zentrierelement (7) geschoben wird,
- Abziehen einer Schutzfolie von der klebenden Seite der Etikettenscheibe (1),
- Auflegen der Compact Disc (3) mit ihrer Etikettierseite nach unten auf das Positionierteil (5), wobei die Compact Disc (3) mit ihrer zentralen Öffnung (4) über das Zentrierteil (8) geschoben wird und auf dem Zentrierelement (7) aufliegt und wobei der Abstand zwischen Etikettenscheibe (1) und Compact Disc (3) durch die Höhe, mit der das Zentrierelement (7) über die scheibenförmige Oberseite (11) in der Ruhestellung (13) hinausragt, bestimmt wird,
- Herunterdrücken des Positionierteils (5) mit auf dem Zentrierelement (7) aufgelegter Compact Disc (3) aus der Ruhestellung (13) in vertikaler Richtung in die Etikettierstellung (19) auf die Kleberseite der Etikettenscheibe (1),
- Entlasten des Positionierteils (5), wobei das Positionierteil (5) durch die Federzungen (15, 16) am Außenring (10) in die Ruhestellung (13) zurück springt und dabei die auf dem Zentrierelement (7) liegende etikettierte Compact Disc (3) von der Oberseite (11) des Basisteiles (9) abhebt.

19. Verfahren zur Herstellung einer Etikettiervorrichtung entsprechend einem der Ansprüche 1 bis 17 für Compact Discs (3), das folgende Verfahrensschritte aufweist:
- Bereitstellen einer zweiteiligen Spritzgussform, mit einer Unterform und einer Oberform, die in zusammengefahrenem und abgedichtetem Zustand eine Hohlform bilden, wobei die Hohlform der Form der Etikettiervorrichtung (30) nach einem der Ansprüche 1 bis 17 entspricht,
- Einspritzen von Kunststoff in die geschlossene Spritzgussform unter Auffüllen der Hohlform mit Kunststoff,
- Öffnen der zweiteiligen Spritzgussform und Entfernen der Etikettiervorrichtung (30) aus Kunststoff.

## Claims

1. Device for placing a label disc (1) with a first central hole (2) on to a compact disc (3) with a second central hole (4), the device having:
a positioning part (5) which has at least one centring element (7), the external dimension of which is adapted to the first central hole (2) of the label disc (1), and
which has at its centre a centring part (8), the external dimension of which is adapted to the second central hole (4) of the compact disc (3) and which protrudes above the centring element (7),
a base (9) with an outer ring (10) which supports a disc-shaped top surface (11) on which the label disc (1) can be positioned, the top surface (11) having a centre hole (12) in which the positioning part (5) is movably positioned perpendicular to the top surface (11) and, when in the non-operative position (13), protrudes above the top surface (11) and, when in the labelling position (14), is lowered into the centre hole (12),
**characterised in that**
the outer ring (10) has at least one tongue spring (15, 16) in a first adapted recess (17, 18) in the outer ring (10), the tongue base (19) of which spring is secured to a lower region (20) of the outer ring (10) and the tongue tip (21) of which spring carries a flexible support (22, 23), the support (22, 23) extending radially inwards from the tip (21) in a second adapted recess (24, 25) of the top surface (11) as far as the positioning part (5).

2. Device as in claim 1,
**characterised in that**
the cross-section of the tongue springs (15, 16) is curved in a concave manner, and each tongue spring (15, 16) has a pressing point.

3. Device as in claim 1 or claim 2,
**characterised in that**
the positioning part (5), together with the centring element (7) and the centring part (8), is a one-piece unit (6).

4. Device as in one of the preceding claims,
**characterised in that**
the centring element (7) and the centring part (8) can be moved together perpendicular to the top surface (11).

5. Device as in one of the preceding claims,
**characterised in that**
the centring element (7), the centring part (8), the flexible support (22, 23, 26), the tongue spring (15, 16) and the outer ring (10) are connected to each other in a non-detachable manner.

6. Device as in one of the preceding claims,
**characterised in that**
the device (30) is made in one single piece.

7. Device as in one of the preceding claims,
**characterised in that**
the device (30) is a single injection-moulded part.

8. Device as in one of the preceding claims,
**characterised in that**
the positioning part (7) has a ring-shaped pedestal (28) as a centring element, from the surface (29) of which the centring part (8) protrudes in the centre.

9. Device as in one of the preceding claims,
**characterised in that**
the centring element (7) is a ring (31) which has a base plate (32), in the centre of which is positioned the centring part (8).

10. Device as in one of the preceding claims,
**characterised in that**
the space between the compact disc (3) and the label disc (1) corresponds to the height of the centring element (7) by which the centring element (7) protrudes above the top surface (11) of the outer ring (10).

11. Device as in one of the preceding claims,
**characterised in that**
the centring element (7) has at least two ring segments (33, 34) which protrude above the top surface (11) of the outer ring (10) and which are connected to each other by means of a circular base plate (32).

12. Device as in one of the preceding claims,
**characterised in that**
the support (22, 23, 26) tapers radially inwards to the positioning part (5).

13. Device as in one of the preceding claims,
**characterised in that**
the tongue spring (15, 16) is wider in the area of the tongue base (19) than in the area of the tongue tip (21).

14. Device as in one of the preceding claims,
**characterised in that**
the outer ring (10) is reinforced in the lower region (20).

15. Device as in one of the preceding claims,
**characterised in that**
the outer ring (10) has an outer flange (34) in the lower region (20).

16. Device as in one of the preceding claims,
**characterised in that**
in the edge area of the centre hole (12) of the top surface (11), a reinforcing piece (36) is positioned on the underside.

17. Device as in one of the preceding claims,
**characterised in that**
at least three tongue springs (15, 16) with three flexible supports (22, 23, 26) are positioned at intervals around the periphery of the outer ring (10).

18. Method for using the device as in one of claims 1 to 17 for labelling a compact disc (3), which method has the following process stages:
- placing the label disc (1) with the label downwards on to the horizontal disc-shaped top surface (11) of the base (9), the adhesive side of the label disc (1) facing upwards and the label disc (1) being pushed with its central hole (2) over the centring element (7),
- removal of a protective film from the adhesive side of the label disc (1),
- placing the compact disc (3) with its label side downwards on to the positioning part (5), the compact disc (3) being pushed with its central hole (4) over the centring part (8) and lying on top of the centring element (7), and the space between the label disc (1) and the compact disc (3) being determined by the height by which the centring element (7) protrudes above the disc-shaped top surface (11) when in the non-operative position (13),
- pressing down the positioning part (5) with the compact disc (3) that is placed on top of the centring element (7), from the non-operative position (13) vertically into the labelling position (19) on to the adhesive side of the label disc (1),
- releasing the positioning part (5), the positioning part (5) springing back by the tongue springs (15, 16) on the outer ring (10) into the non-operative position (13), and in the process lifting the labelled compact disc (3), which is lying on top of the centring element (7), from the top surface (11) of the base (9).

19. Method of manufacturing a labelling device in accordance with one of claims 1 to 17 for compact discs (3), which method has the following process stages:
- providing a two-part injection mould, with a bottom mould and a top mould which form a hollow mould when placed together and sealed, the hollow mould corresponding to the shape of the labelling device (30) as in one of claims 1 to 17,
- injecting plastic into the closed injection mould, thus filling the hollow mould with plastic,
- opening the two-part injection mould and removing the labelling device (30) made of plastic.

## Revendications

1. Dispositif pour appliquer une étiquette ronde (1) pourvue d'une première ouverture centrale (2) sur un disque compact (3) pourvu d'une seconde ouverture centrale (4), le dispositif comportant :
une partie de positionnement (5) qui comporte au moins un élément de centrage (7) dont la dimension extérieure est adaptée à la première ouverture centrale (2) de l'étiquette ronde (1) et qui comporte en son centre une partie de centrage (8) dont le diamètre extérieur est adapté à la seconde ouverture centrale (4) du disque compact (3) et qui dépasse de l'élément de centrage (7),
une partie de base (9) avec un anneau extérieur (10) qui porte un dessus en forme de rondelle (11) sur lequel peut être disposée l'étiquette ronde (1), le dessus (11) étant pourvu d'une ouverture centrale (12) dans laquelle la partie de positionnement (5) est disposée avec une possibilité de déplacement perpendiculaire au dessus (11) et, dans une position de repos (13), dépasse du dessus (11) et, dans une position d'étiquetage (14), est enfoncée dans l'ouverture centrale (12), **caractérisé en ce que** l'anneau extérieur (10) comporte, dans un premier évidement adapté (17, 18) de l'anneau extérieur (10), au moins une languette élastique (15, 16) dont la racine de languette (19) est fixée à une zone de pied (20) de l'anneau extérieur (10) et dont la pointe de languette (21) porte une barre porteuse flexible (22, 23), la barre porteuse (22, 23) s'étendant radialement vers l'intérieur depuis la pointe de languette (21) jusqu'à la partie de positionnement (5) dans un second évidement adapté (24, 25) du dessus (11).

2. Dispositif selon la revendication 1, **caractérisé en ce que** la section transversale des languettes élastiques (15, 16) présente une bombement concave et chaque languette élastique (15, 16) comporte un point de poussée.

3. Dispositif selon la revendication 1 ou la revendication 2, **caractérisé en ce que** la partie de positionnement (5) forme un ensemble d'un seul tenant (6) avec l'élément de centrage (7) et la partie de centrage (8).

4. Dispositif selon une des revendications précédentes, **caractérisé en ce que** l'élément de centrage (7) et la partie de centrage (8) sont déplaçables l'un avec l'autre perpendiculairement au dessus (11).

5. Dispositif selon une des revendications précédentes, **caractérisé en ce que** l'élément de centrage (7), la partie de centrage (8), la barre porteuse flexible (22, 23, 26), la languette élastique (15, 16) et l'anneau extérieur (10) sont reliés entre eux de manière non détachable.

6. Dispositif selon une des revendications précédentes, **caractérisé en ce que** le dispositif (30) est conçu d'un seul tenant.

7. Dispositif selon une des revendications précédentes, **caractérisé en ce que** le dispositif (30) est une pièce unique moulée par injection.

8. Dispositif selon une des revendications précédentes, **caractérisé en ce que** la partie de positionnement (7) comporte un socle annulaire (28) qui fait fonction d'élément de centrage et de la surface (29) duquel dépasse, en position centrale, la partie de centrage (8).

9. Dispositif selon une des revendications précédentes, **caractérisé en ce que** l'élément de centrage (7) est un anneau (31) qui comporte une plaque de base (32), au centre de laquelle est disposée la partie de centrage (8).

10. Dispositif selon une des revendications précédentes, **caractérisé en ce que** la distance entre le disque compact (3) et l'étiquette ronde (1) correspond à la hauteur de l'élément de centrage (7), de laquelle l'élément de centrage (7) dépasse du dessus (11) de l'anneau extérieur (10).

11. Dispositif selon une des revendications précédentes, **caractérisé en ce que** l'élément de centrage (7) comporte au moins deux segments de couronne (33, 34) qui dépassent du dessus (11) de l'anneau extérieur (10) et sont reliés entre eux par l'intermédiaire d'une plaque de base circulaire (32).

12. Dispositif selon une des revendications précédentes, **caractérisé en ce que** la barre porteuse (22, 23, 26) se rétrécit radialement vers l'intérieur en direction de la partie de positionnement (5).

13. Dispositif selon une des revendications précédentes, **caractérisé en ce que** la languette élastique (15, 16) est plus large dans la zone de racine de languette (19) que dans la zone de pointe de languette (21).

14. Dispositif selon une des revendications précédentes, **caractérisé en ce que** l'anneau extérieur (10) est renforcé dans la zone de pied (20).

15. Dispositif selon une des revendications précédentes, **caractérisé en ce que** l'anneau extérieur (10) comporte un collet extérieur (35) dans la zone de pied (20).

16. Dispositif selon une des revendications précédentes, **caractérisé en ce que**, dans la zone de bord de l'ouverture centrale (12) du dessus (11), un renfort (36) est disposé sur la sous-face.

17. Dispositif selon une des revendications précédentes, **caractérisé en ce qu'**au moins trois languettes élastiques (15, 16) avec trois barres porteuses flexibles (22, 23, 26) sont réparties sur la circonférence de l'anneau extérieur (10).

18. Procédé pour l'utilisation du dispositif selon une des revendications 1 à 17 pour l'étiquetage d'un disque compact (3), ledit procédé comprenant les étapes de procédé suivantes :
- mise en place de l'étiquette ronde (1), avec l'étiquette tournée vers le bas, sur le dessus horizontal en forme de rondelle (11) de la partie de base (9), le côté collant de l'étiquette ronde (1) étant tourné vers le haut et l'étiquette ronde (1) étant enfilée par son ouverture centrale (2) sur l'élément de centrage (7),
- retrait d'une pellicule protectrice du côté collant de l'étiquette ronde (1),
- mise en place du disque compact (3), avec son côté étiquette tourné vers le bas, sur la partie de positionnement (5), le disque compact (3) étant enfilé par son ouverture centrale (4) sur la partie de centrage (8) et reposant sur l'élément de centrage (7), la distance entre l'étiquette ronde (1) et le disque compact (3) étant déterminée par la hauteur de laquelle l'élément de centrage (7) dépasse du dessus en forme de rondelle (11) en position de repos (13),
- enfoncement vertical de la partie de positionnement (5), avec le disque compact (3) posé sur l'élément de centrage (7), de la position de repos (13) à la position d'étiquetage (19) sur le côté adhésif de l'étiquette ronde (1),
- relâchement de la partie de positionnement (5), la partie de positionnement (5) revenant en position de repos (13) grâce aux languettes élastiques (15, 16) situées au niveau de l'anneau extérieur (10) et décollant ainsi du dessus (11) de la partie de base (9) le disque compact (3) étiqueté reposant sur l'élément de centrage (7).

19. Procédé de fabrication d'un dispositif d'étiquetage conforme à une des revendications 1 à 17 pour disques compacts (3), ledit procédé comportant les étapes de procédé suivantes :
- mise en oeuvre d'un moule d'injection en deux parties, avec un moule inférieur et un moule supérieur qui, à l'état accolé et étanché, forment un moule creux, le moule creux correspondant à la forme du dispositif d'étiquetage (30) selon une des revendications 1 à 17,
- injection de matière plastique dans le moule d'injection fermé avec remplissage du moule creux avec de la matière plastique,
- ouverture du moule d'injection en deux parties et démoulage du dispositif d'étiquetage (30) en matière plastique.
